# EUROPÄISCHE PATENTSCHRIFT

(11) **EP 2 697 846 B1**
(45) Veröffentlichungstag und Bekanntmachung des Hinweises auf die Patenterteilung: **29.07.2015**
(21) Anmeldenummer: 12711366.0
(22) Anmeldetag: 13.03.2012
(51) Int. Cl.: H01M 2/20, H01M 2/22, H01G 11/76, H01G 11/78, H01G 2/04

(54) **SPEICHEREINHEIT ZUM SPEICHERN ELEKTRISCHER ENERGIE**
STORAGE UNIT FOR STORING ELECTRICAL ENERGY
UNITÉ D'ACCUMULATION POUR ACCUMULER DE L'ÉNERGIE ÉLECTRIQUE

(30) Priorität: 13.04.2011 DE 102011007319
(43) Veröffentlichungstag der Anmeldung: 19.02.2014
(73) Patentinhaber: Robert Bosch GmbH, 70442 Stuttgart (DE)
(72) Erfinder: DILLMANN, Adolf, 72525 Muensingen (DE); MOESSNER, Joerg, 72768 Reutlingen (DE); SCHOENKNECHT, Andreas, 71272 Renningen (DE); HUEHNER, Stefan, 72127 Kusterdingen (DE)
(86) Internationale Anmeldenummer: PCT/EP2012/054329
(87) Internationale Veröffentlichungsnummer: WO 2012/139839

(56) Entgegenhaltungen:
- EP-A2- 0 142 029
- EP-A2- 0 183 257
- WO-A1-2010/142679
- DE-A1-102008 047 740
- DE-A1-102008 050 437
- DE-A1-102009 027 306
- GB-A- 2 083 278
- US-A- 4 678 728
- US-A1- 2008 081 253

## Beschreibung

### Stand der Technik

Die Erfindung betrifft eine Speichereinheit zum Speichern elektrischer Energie. Die Speichereinheit weist wenigstens einen Energiespeicher auf. Der Energiespeicher weist wenigstens einen positiven Anschluss und wenigstens einen negativen Anschluss auf. Der Energiespeicher ist ausgebildet, über den positiven und den negativen Anschluss mit elektrischer Energie aufgeladen zu werden und die elektrische Energie über die Anschlüsse wieder abzugeben.

Bei aus dem Stand der Technik bekannten Energiespeichern besteht das Problem, dass Zuleitungen zu dem Energiespeicher sowohl Übergangswiderstände darstellen, als auch Induktivitäten bilden, welche ein effizientes und schnelles Beund Entladen des Energiespeichers vermindern.

Aus DE 10 2009 027 326 A1 ist eine Kondensatorbaugruppe bekannt, die einen inneren Leiter aufweist, welcher zur Aufnahme eines ersten Potentials ausgebildet ist und einen L-förmigen Querschnitt in Längsrichtung aufweist. Ein äußerer Leiter ist zur Aufnahme eines zweiten Potentials ausgebildet, und ist von dem inneren Leiter elektrisch isoliert. Der äußere Leiter weist einen ersten Abschnitt mit einem L-förmigen Querschnitt in Längsrichtung auf, welcher an dem inneren Leiter ausgerichtet ist, und einen zweiten Abschnitt, welcher mit dem ersten Abschnitt gekoppelt ist und einen L-förmigen Querschnitt in einer seitlichen Richtung aufweist. Der zweite Abschnitt und der innere Leiter legen einen inneren Bereich fest. Ein Kondensator ist in dem inneren Bereich angeordnet und mit dem inneren Leiter und dem zweiten Abschnitt gekoppelt. Zur Kontaktierung weisen die Leiter fingerförmige Abschnitte auf, die mittels Löten mit dem Kondensator kontaktiert werden.

### Offenbarung der Erfindung

Erfindungsgemäß weist die Speichereinheit eine mit dem positiven Anschluss verbundene elektrisch leitfähige Kontaktschiene und eine mit dem negativen Anschluss verbundene elektrisch leitfähige Kontaktschiene auf. Die Kontaktschienen weisen jeweils wenigstens einen äußeren Anschluss zum elektrischen Verbinden der Speichereinheit auf. Durch die Kontaktschiene kann die Verbindung von dem äußeren Anschluss zu den Anschlüssen des Energiespeichers, insbesondere dem positiven Anschluss und dem negativen Anschluss, mit einer geringen Induktivität und einem geringen Übergangswiderstand ausgebildet sein.

Erfindungsgemäß ist die Kontaktschiene mittels eines Bleches mit dem wenigstens einen Anschluss verbunden.

Das Blech weist im Bereich des Anschlusses wenigstens oder genau eine Aussparung auf, wobei die Aussparung einen erfindungsgemäß kurvenförmigen Kontakt wenigstens teilweise umgibt. Dadurch ist der kurvenförmige Kontakt in der Aussparung gebildet, wobei die Aussparung eine äußere Form des Kontaktes definiert. Der kurvenförmige Kontakt ist mit dem Blech verbunden und im Bereich eines Endes des kurvenförmigen Kontakts mit dem Anschluss des Energiespeichers verbunden. Denkbar ist auch ein kurvenförmiger Kontakt, der an zwei oder mehreren Orten mit dem Blech verbunden ist und durch zwei beziehungsweise mehrere Aussparungen definiert ist.

Erfindungsgemäß kann sich der kurvenförmige Kontakt in der Aussparung federnd bewegen.

Durch kurvenförmigen Kontakt wird vorteilhaft eine mechanische Entlastung des positiven Anschlusses und des negativen Anschlusses bewirkt. Bevorzugt ist der kurvenförmige Kontakt derart ausgebildet, dass die mechanische Entlastung in wenigstens zwei, bevorzugt drei räumlichen Dimensionen bewirkt werden kann.

Bevorzugt ist der Kontakt an den Anschluss des Energiespeichers angeschweißt.

In einer bevorzugten Ausführungsform der Speichereinheit weist der kurvenförmige Kontakt eine L-Form auf. Die L-Form als Kurvenform bewirkt vorteilhaft eine flächensparende mechanische Entlastung des Kontaktes in der Ebene des Bleches, welches die Aussparung aufweist die den kurvenförmigen Kontakt bildet.

In einer anderen Ausführungsform weist der kurvenförmige Kontakt wenigstens eine Mäanderschleife als Kurvenform auf. Weiter bevorzugt weist der kurvenförmige Kontakt wenigstens zwei Mäanderschleifen als Kurvenform auf, welche in einer Ebene, bevorzugt der Ebene des Bleches, in dem die Aussparung gebildet ist, in zueinander entgegengesetzte Richtungen weisen. So kann beispielsweise bei zwei miteinander verbundenen Mäanderschleifen eine S-Form gebildet sein.

Der positive und/oder negative elektrische Anschluss des Energiespeichers ist bevorzugt durch eine elektrisch leitfähige Schicht, insbesondere eine Schoopschicht gebildet. Die Schicht kann vorteilhaft von vielen insbesondere kurvenförmigen Kontakten elektrisch kontaktiert werden. So kann eine Stromdichte und ein Gesamtübergangswiderstand von der Kontaktschiene zum Energiespeicher, und somit auch Wärmeverluste in der elektrisch leitfähigen Schicht klein sein.

In einer bevorzugten Ausführungsform weist der Energiespeicher wenigstens einen Akkumulator und/oder wenigstens einen Kondensator auf.

Beispielhafte Ausführungsformen für den Kondensator sind ein Wickelkondensator, ein Scheibenkondensator oder ein Doppelschicht-Kondensator. Bevorzugt ist der Energiespeicher, insbesondere Kondensator ausgebildet, im geladenen Zustand elektrische Ladungen mit einer Spannung zwischen 100 Volt und 1000 Volt, bevorzugt zwischen 300 und 500 Volt voneinander getrennt zu halten.

In einer anderen Ausführungsform, oder zusätzlich zu der Ausführungsform als Kondensator kann der Energiespeicher durch einen Akkumulator gebildet sein. Der Akkumulator ist beispielsweise ein Nickel-Metallhydrid-Akkumulator, ein Bleiakkumulator, ein Lithium-Ionen-Akkumulator, ein Lithium-Polymer-Akkumulator oder ein Lithium-Eisen-Phosphat-Akkumulator, welcher vorteilhaft mit hohen Strömen schnell auf- und entladen werden kann.

In einer bevorzugten Ausführungsform ist die Kontaktschiene wenigstens teilweise durch einen abgewinkelten Abschnitt des Bleches gebildet. So kann die Kontaktschiene vorteilhaft material- und platzsparend mit den Anschlüssen des Energiespeichers verbunden sein.

Beispielsweise kann der Energiespeicher wenigstens einen positiven Anschluss auf einer Seite des Energiespeichers aufweisen, und wenigstens einen negativen Anschluss auf einer weiteren Seite aufweisen, welche der Seite mit den positiven Anschlüssen gegenüberliegt. So kann die Speichereinheit vorteilhaft mehrere Energiespeicher zwischen den zwei Blechen aufnehmen, wobei von den zwei Blechen ein erstes Blech die negativen Anschlüsse der Energiespeicher kontaktiert und ein zweites Blech die positiven Anschlüsse der Energiespeicher kontaktiert.

In einer bevorzugten Ausführungsform ist die Kontaktschiene im abgewinkelten Bereich wenigstens teilweise mit wenigstens einem weiteren Verstärkungsblech verbunden. Das Verstärkungsblech und der abgewinkelte Bereich sind mit einer flachen Erstreckung jeweils aufeinander angeordnet. So kann vorteilhaft eine geringere Stromdichte im Bereich der Kontaktschiene erzeugt werden, als im Vergleich zu einer Kontaktschiene ohne das Verstärkungsblech.

In einer bevorzugten Ausführungsform ist das Verstärkungsblech mit dem abgewinkelten Bereich des Bleches mittels einer Clinch-Verbindung und/oder mittels eines Verbindungsmittels, insbesondere mittels einer Niete oder einer Schraube, verbunden. Die Clinch-Verbindung, auch als Durchsetz-gefügte Verbindung bezeichnet, kann beispielsweise eine druckgefügte Verbindung sein, welche mittels eines Stempels und einer dem Stempel entsprechenden Matrize erzeugt wird. Vorteilhaft kann so das Verstärkungsblech und das Blech zueinander verschiedene Blechdicken aufweisen, weiter vorteilhaft kann so eine gasdichte elektrische Verbindung zwischen dem Blech und dem Verstärkungsblech gebildet sein.

In einer anderen Ausführungsform ist das Verstärkungsblech mit dem abgewinkelten Bereich des Bleches verschweißt.

In einer bevorzugten Ausführungsform weist das Blech im abgewinkelten Bereich den äußeren Anschluss zum elektrischen Verbinden der Speichereinheit auf. Weiter bevorzugt ist das Blech im abgewinkelten Bereich mit dem äußeren Anschluss zum elektrischen Verbinden der Speichereinheit elektrisch verbunden.

Bevorzugt weit das Blech im abgewinkelten Bereich sich mit wenigstens einer Querkomponente zu einem Winkelfalz erstreckende schlitzförmige Durchbrüche auf. Die Durchbrüche verlaufen bevorzugt bis zum Rand des abgewinkelten Bereiches und bewirken vorteilhaft eine Entlastung bei mechanischen oder thermisch verursachten Verformungen der Stromschiene. Dadurch kann vorteilhaft ein mit der Stromschiene elektrisch oder zusätzlich mechanisch zu verbindende Einheit, beispielsweise eine Leistungsendstufe eines Elektromotors kraftentkoppelt mit dem Energiespeicher verbunden werden.

In einer bevorzugten Ausführungsform ist der äußere Anschluss durch wenigstens einen Stift gebildet, wobei sich der Stift wenigstens mit einer Querkomponente oder quer zum abgewinkelten Bereich erstreckt. Der Stift ist ausgebildet, in eine entsprechend ausgebildete Öffnung eines Gegenkontaktes eingepresst zu werden und den Gegenkontakt im Bereich der Öffnung, bevorzugt einen Öffnungsrand der Öffnung, vollständig zu kontaktieren. So kann die Speichereinheit vorteilhaft mittels Steckens mit dem Gegenkontakt verbunden werden.

Die Speichereinheit weist bevorzugt mehrere äußere Anschlüsse für jede Kontaktschiene auf.

Weiter bevorzugt sind die äußeren Anschlüsse der Kontaktschiene entlang einer Längserstreckung der Kontaktschiene voneinander beabstandet. So kann eine gleichmäßige Stromeinleitung in die Kontaktschiene bewirkt werden, welche sowohl geringe Wärmeverluste im Bereich der Kontaktschiene als auch geringe induktive Verluste im Bereich der Kontaktschiene bewirken. Weiter vorteilhaft kann mittels der Kontaktschiene eine Kraft, welche beim Einstecken der äußeren Anschlüsse in entsprechende Gegenkontakte erzeugt wird, mittels der Kontaktschiene verteilt werden, sodass Kräfte, welche beim Zusammenstecken der Speichereinheit mit den entsprechenden Gegenkontakten entstehen, nur gering oder gar nicht auf die positiven und die negativen Anschlüsse des Energiespeichers beziehungsweise der Energiespeicher wirken.

Bevorzugt ist der Energiespeicher ein Zwischenkreiskondensator eines elektrischen Antriebs. Vorteilhaft kann der Energiespeicher ein Zwischenkreiskondensator eines elektrisch getriebenen Elektrofahrzeuges oder eines Hybridfahrzeuges sein, welche jeweils den elektrischen Antrieb aufweisen. Das Hybridfahrzeug weist beispielsweise zusätzlich zu dem elektrischen Antrieb einen weiteren Antrieb, beispielsweise einen Verbrennungsmotor auf. Der elektrisch Antrieb umfasst bevorzugt einen insbesondere elektronisch kommutierten Elektromotor mit einer mit Statorspulen des Elektromotors verbundenen Leistungsendstufe, wobei die Leistungsendstufe mit dem Energiespeicher, insbesondere Zwischenkreiskondensator verbunden ist.

Die Erfindung wird nun im Folgenden anhand von Figuren und weiteren Ausführungsbeispielen erläutert. Weitere vorteilhafte Ausführungsvarianten ergeben sich aus den in den Figuren und den abhängigen Ansprüchen benannten Merkmalen.
Figur 1 zeigt - schematisch - ein Ausführungsbeispiel für einen Teil einer Speichereinheit mit einer Kontaktschiene, die mit Anschlüssen von Energiespeichern verbunden ist;
Figur 2 zeigt schematisch die in Figur 1 gezeigte Speichereinheit in einer Aufsicht;
Figuren 3, 4 und 5 zeigen jeweils schematisch ein Ausführungsbeispiel für einen gefederten Kontakt einer Speichereinheit zum Kontaktieren eines Anschlusses eines Energiespeichers;
Figur 6 zeigt schematisch eine Aufsicht auf einen in Figur 1 und 2 dargestellten Energiespeicher;
Figur 7 zeigt schematisch ein platzsparendes Ausführungsbeispiel für eine Anordnung umfassend 2 Speichereinheiten.

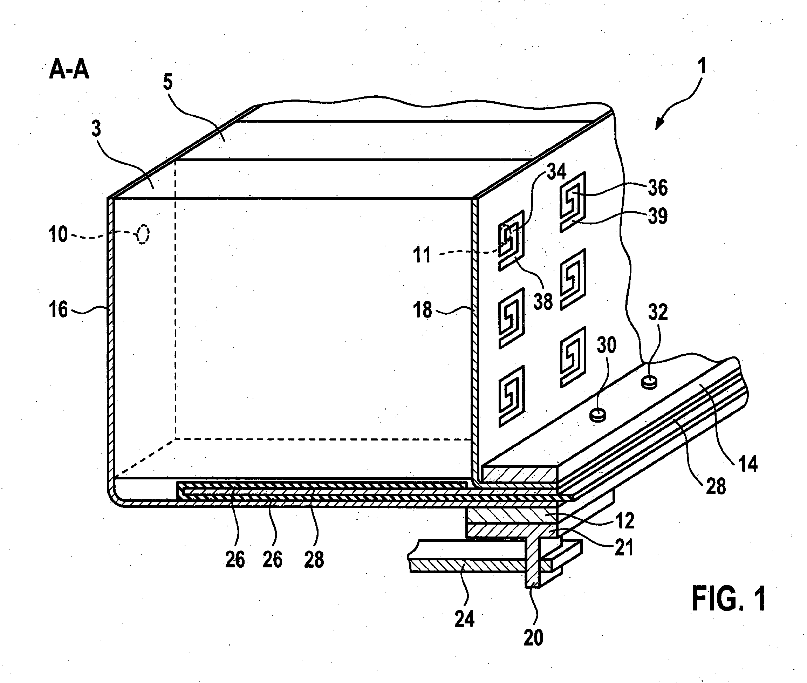

Figur 1 zeigt ein Ausführungsbeispiel für eine Speichereinheit 1. Die Speichereinheit 1 weist einen Energiespeicher 3 und einen Energiespeicher 5 auf. Die Energiespeicher 3 und 5 sind jeweils als Wickelkondensator ausgebildet. Die Energiespeicher 3 und 5 weisen jeweils einen positiven Anschluss und einen negativen Anschluss auf, wobei in Figur 1 ein positiver Anschluss 10 des Energiespeichers 3 und ein negativer Anschluss 11 des Energiespeichers 3 dargestellt ist. Die Speichereinheit 1 weist ein Blech 16 und Blech 18 auf, wobei die Bleche 16 und 18 jeweils abgewinkelt sind und mit einem abgewinkelten Abschnitt die Energiespeicher 3 und 5, sowie weitere nicht dargestellte Energiespeicher zwischeneinander einschließen. Dazu sind die vorgenannten Abschnitte der Bleche 16 und 18 parallel zueinander derart beabstandet angeordnet, dass die Energiespeicher 3 und 5 in einem zwischen den Blechabschnitten eingeschlossenen Raum aufgenommen sind.

Das Blech 18 ist mit einer negativen Kontaktschiene 14 verbunden, wobei die negative Kontaktschiene auf einem abgewinkelten Blechabschnitt des Bleches 18 aufliegt, welcher mit wenigstens einer Querkomponente oder senkrecht zu dem Blechabschnitt des Bleches 18 verläuft, der zusammen mit dem Blech 16 die Energiespeicher 3 und 5 zwischeneinander einschließt.

Mittels der Bleche 16 und 18 ist eine Art Hohlschiene oder Rinne gebildet, in der die Energiespeicher aufgenommen sind. Die Hohlschiene weist einen mittels eines Abschnitts des Bleches 16 gebildeten Boden auf, an dem ein in einem Isolator 26 eingewickeltes Abschirmblech 28 angeordnet ist.

Das Abschirmblech 28 erstreckt sich zusammen mit einem Teil der Isolationsfolie 26 zwischen den abgewinkelten Blechabschnitt des Bleches 18, auf dem die negative Kontaktschiene 14 aufliegt und einem Blechabschnitt des Bleches 16, welches sich bis hin zu einem Ende des abgewinkelten Abschnitts des Bleches 18 erstreckt, auf dem die negative Kontaktschiene 14 aufliegt. Das Blech 18 liegt auf einem Abschnitt des Abschirmblechs 28 auf und ist mit dem Abschirmblech 28 somit elektrisch verbunden. Zwischen dem Abschirmblech 28 und dem Blech 16 erstreckt sich ein Teil der Isolationsfolie 26, welche ausgebildet ist, die Bleche 16 und 18 voneinander elektrisch zu isolieren.

Auf dem Blechabschnitt des Bleches 16, welches sich im Bereich der negativen Kontaktschiene 14 erstreckt, liegt eine positive Kontaktschiene 12 auf. Die positive Kontaktschiene 12 und die negative Kontaktschiene 14 sind somit einander gegenüberliegend angeordnet und schließen - beispielsweise nach Art eines Sandwiches - den Abschnitt des Bleches 16, die elektrische Isolationsfolie 26, einen Abschnitt des Abschirmbleches 28 und einen Abschnitt des Bleches 18 zwischeneinander ein.

Durch die Kontaktschienen 12 und 14 ist jeweils eine Art Verstärkungsblech gebildet, welches ausgebildet ist, eine Stromdichte in der Kontaktschiene - im Vergleich zu ohne das Verstärkungsblech - zu verringern.

Der so gebildete Schichtaufbau ist in diesem Ausführungsbeispiel durch eine mittels Durchsetzen eines Stempels in eine Matrize gefügte Verbindung zusammengehalten, wobei von der so gebildeten durchsetzgefügten Verbindung in die Matrize gepresste Köpfe 30 und 32 der Kontaktschiene 14 beispielhaft dargestellt sind.

Die positive Kontaktschiene 12 ist mit einem äußeren Anschluss 20 elektrisch leitend und mechanisch - beispielsweise mittels Schweißen - verbunden. Der äußere Anschluss 20 weist einen Fuß 21 auf, wobei der Anschluss 20 an den Fuß 21 angeformt ist und sich senkrecht von dem Fuß 21 abweisend erstreckt.

Der Anschluss 20 ist somit mittels des Fußes 21 mit der positiven Kontaktschiene 12 verbunden. Der Anschluss 20 ist in diesem Ausführungsbeispiel in ein Stanzgitter 24 eingepresst, wobei das Stanzgitter elektrisch leitend - beispielsweise umfassend Kupfer - ausgebildet ist und in diesem Ausführungsbeispiel mit einem Endabschnitt dargestellt ist.

Das Blech 18 weist für jeden negativen Anschluss des Energiespeichers, in diesem Ausführungsbeispiel die Energiespeicher 3 und 5, jeweils einen Kontakt auf, wobei der Kontakt mit dem einen negativen Anschluss elektrisch verbunden ist. Die elektrische Verbindung ist beispielsweise mittels Schweißen oder Löten erzeugt. Der Kontakt 34 ist in diesem Ausführungsbeispiel durch einen Flächenbereich des Bleches 18 gebildet.

Das Blech 18 weist eine Ausnehmung 38 auf, welche den Kontakt 34 wenigstens teilweise umschließt.

Dargestellt ist auch ein Kontakt 36, welcher zum Teil von einer Ausnehmung 39 umschlossen ist. Die Kontakte 34 und 36 sind beispielsweise mittels Stanzen oder Laserschneiden aus dem Blech 18 erzeugt.

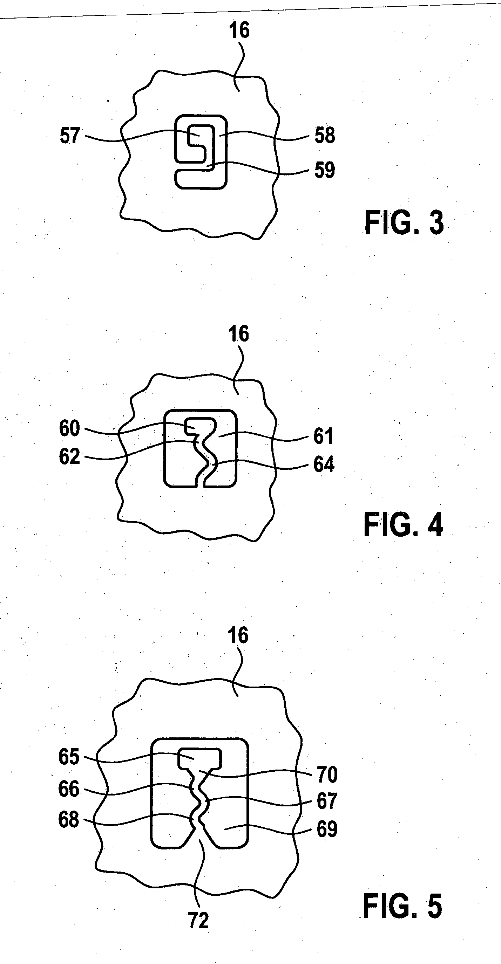

Weitere Ausführungsbeispiele für Kontakte, welche anstelle der Kontakte 34 und 36 mit dem Blech 18 verbunden und an dieses angeformt sein können, sind in den Figuren 3, 4 und 5 näher dargestellt.

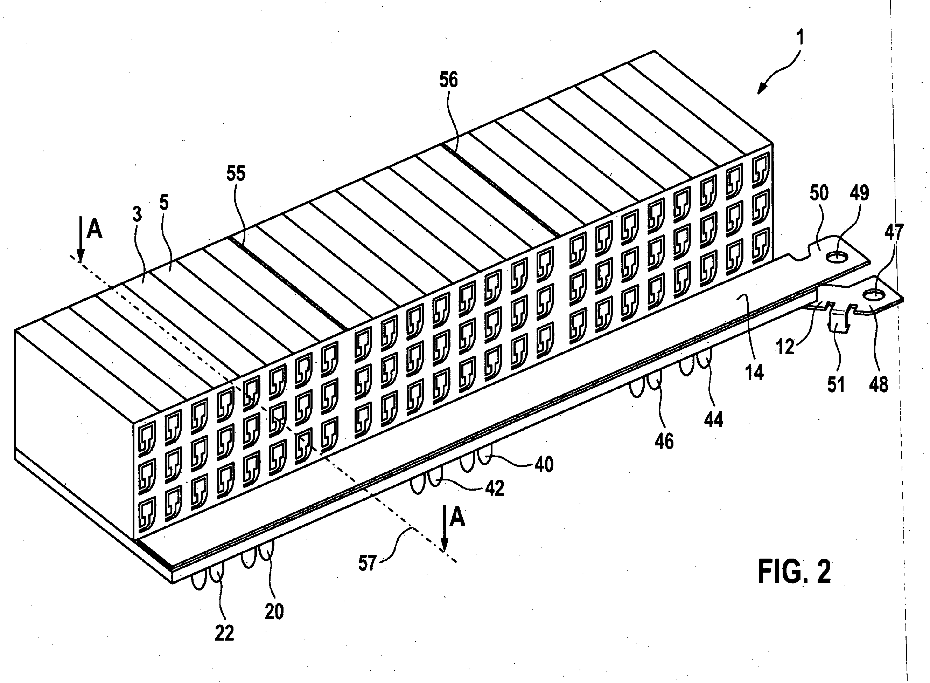

Das Blech 16 weist wie das Blech 18 Kontakte wie die Kontakte 34 und 36 auf, welche jeweils mit einem positiven Anschluss des Energiespeichers 3, beziehungsweise 5 verbunden sind. Figur 2 zeigt die in Figur 1 zum Teil dargestellte Speichereinheit 1 in einer Aufsicht.

Dargestellt sind auch die Energiespeicher 3 und 5, welche neben weiteren Energiespeichern zwischen den Blechen 16 und 18 aufgenommen sind.

Figur 2 zeigt auch einen negativen äußeren Anschluss 22, welcher entlang einer Längsstreckung der negativen Kontaktschiene 14 zu dem äußern positiven Kontakt 20 benachbart angeordnet ist.

Der negative äußere Kontakt 22 ist mit der negativen Kontaktschiene 14 elektrisch und mechanisch verbunden. Dazu kann der äußere negative Kontakt 22 mittels Schweißen mit der negativen Kontaktschiene 14 verbunden sein.

Dazu sind in den Blechen, welche zwischen den Kontaktschienen 12 und 14 eingeschlossen sind, sowie in der Abschirmfolie 26, weiter in der positiven Kontaktschiene 12 entsprechende Aussparungen gebildet, sodass der äußere positive Kontakt 22 mit einem Kontaktfuß die negative Kontaktschiene 14 kontaktieren kann.

Die Kontaktschiene 14 weist im Bereich eines Endes entlang ihrer Längserstreckung einen Anschluss 50 auf, welcher in diesem Ausführungsbeispiel über ein mittels einer Stirnseite der Speichereinheit gebildetes Ende hinausragt.

Die positive Kontaktschiene 12 weist im Bereich eines Endes entlang ihrer Längserstreckung einen Anschluss 48 auf, welcher seitlich zur Längserstreckung hinausgeführt ist, sodass die Anschlüsse 48 und 50 quer zu einer Längserstreckung der Kontaktschienen 12 und 14 zueinander benachbart angeordnet sind.

Die Kontaktschienen 12 und 14 sind in diesem Ausführungsbeispiel durch sich flach- und längserstreckende Blechstreifen gebildet.

Die Energiespeicher der Speichereinheit 1 sind jeweils zueinander benachbart angeordnet, wobei Anschlüsse der Energiespeicher jeweils in dieselbe Richtung weisen.

Die Energiespeicher der Speichereinheit 1 sind in diesem Ausführungsbeispiel in drei Blöcke aufgeteilt, wobei zwischen zueinander benachbarten Blöcken sich eine Dehnungsfuge erstreckt. Die Dehnungsfuge kann beispielsweise mittels eines Schaumes, beispielsweise eines Polyurethanschaumes, welcher federnd ausgebildet ist, gefüllt sein. So kann vorteilhaft die in Figur 2 dargestellte Speichereinheit 1, welche in Figur 2 mit noch offenen elektrischen Kontakten dargestellt ist, von einem Gehäuse umgeben werden, welches die Energiespeicher und die Bleche 16 und 18 im Bereich der Anschlüsse wenigstens teilweise oder vollständig aufnimmt. Das Gehäuse kann beispielsweise durch ein Mold-Gehäuse oder ein Metallgehäuse gebildet sein. Bei einem Mold-Gehäuse sind von dem Mold-Gehäuse aufgenommene Teile, in diesem Ausführungsbeispiel die Energiespeicher zusammen mit den Blechen 16 und 18 in ein das Mold-Gehäuse bildendes Kunststoffmaterial, insbesondere ein Thermoplast, - beispielsweise durch Umspritzen der Teile in einer Form - eingebettet.

Der Anschluss 50 weist einen in diesem Ausführungsbeispiel rund ausgebildeten Durchbruch 49 auf, der Anschluss 48 weist einen in diesem Ausführungsbeispiel rund ausgebildeten Durchbruch 47 auf. Die Anschlüsse 50 und 48 sind jeweils dazu ausgebildet, mit einer Batterie beispielsweise einer Traktionsbatterie eines Fahrzeugs verbunden zu werden.

Die äußeren Anschlüsse 20 und 22 sind jeweils ausgebildet, mit einer Leistungsendstufe, beispielsweise umfassend IGBT-Transistoren (IGBT = Insulated-Gate-Bipolar-Transistor), verbunden zu werden. Die Speichereinheit 1 weist neben den äußeren Anschlüssen 20 und 22 noch weitere äußere Anschlüsse, nämlich einen negativen Anschluss 42, einen negativen Anschluss 46 und einen positiven Anschluss 40, weiter einen positiven Anschluss 44 auf. Die positiven Anschlüsse 40 und 44 sind - wie der Anschluss 20 - mit der positiven Kontaktschiene 12 verbunden. Die äußeren Anschlüsse 42 und 46 sind wie der äußere Anschluss 22 mit der negativen Kontaktschiene 14 verbunden. So kann mittels mehrerer äußerer Anschlüsse eine Stromverteilung von den äußeren Anschlüssen bis hin zu den Anschlüssen der Energiespeicher bewirkt werden, welche sowohl eine geringe Induktivität als auch kleine Stromdichten aufweist.

Figur 3 zeigt ein Ausführungsbeispiel für einen Kontakt 57, welcher ausgebildet ist, mit einem Anschluss eines Energiespeichers mittels Schweißen verbunden zu werden. Der Kontakt 57 ist mittels eines L-förmigen Kontaktabschnitts 59 mit dem Blech 16 verbunden.

Das Blech 16 weist eine Aussparung 58 auf, welche den Kontakt 57 und den L-förmigen Kontaktabschnitt 59 wenigstens teilweise umgibt, sodass der L-förmige Kontaktabschnitt zusammen mit dem Kontakt 57 sich in der Aussparung 58 federnd bewegen kann.

Der Kontakt 57 und der L-förmige Kontaktabschnitt 59 sind beispielsweise durch Stanzen oder Laserschneiden des Bleches 16 zum Erzeugen der Aussparung 58 gebildet.

Figur 4 zeigt ein Ausführungsbeispiel für einen anderen Kontakt 60, welcher in dem Blech 16 durch Stanzen oder Laserschneiden einer Aussparung 61 gebildet ist. Der Kontakt 60 ist an einen mäanderförmigen Kontaktabschnitt 62 angeformt, wobei sich an den Kontaktabschnitt 62 ein entgegen der Mäandrierungsrichtung des Kontaktabschnitts 62 mäandrierender Kontaktabschnitt 64 anschließt. Der Kontaktabschnitt 64 mündet an das Blech 16 und ist dort an das Blech 16 angeformt. Mittels der mäanderförmigen Kontaktabschnitte 62 und 64 wird erfindungsgemäß eine Feder gebildet, sodass der Kontakt 60 in zwei translatorischen Freiheitsgraden in der Blechebene des Bleches 16 federnd schwingen kann und zusätzlich zu den zwei Freiheitsgraden in der Blechebene in einen dazu senkrecht verlaufenden dritten Freiheitsgrad federnd bewegt werden kann. So kann vorteilhaft eine mechanische Entlastung des Kontaktes 60, insbesondere eine Schweißverbindung zwischen dem Kontakt 60 und einem Anschluss des Energiespeichers gebildet sein.

Figur 5 zeigt ein Ausführungsbeispiel für einen Kontakt 65, welcher in einer Aussparung 69 - beispielsweise durch Stanzen oder Laserschneiden aus dem Blech 16 - gebildet ist. Der Kontakt 65 weist einen Kontaktbereich 70 auf, welcher an den Kontakt 65 angeformt ist. Der Kontaktbereich 70 ist - in der Blechebene des Bleches 16 - sich verjüngend ausgebildet und mündet in einer Mäanderschleife 66, an welche sich eine entgegengesetzt zur Mäanderschleife 66 mäandrierende Mäanderschleife 67 anschließt.

An die Mäanderschleife 67 schließt eine Mäanderschleife 68 an, welche - in der Ebene des Bleches 16 - in dieselbe Richtung mäandriert, wie die Mäanderschleife 66. Die Mäanderschleife 68 mündet in einem sich - insbesondere in der Ebene des Bleches 16 - verbreiternden Bereich 72, welcher in das Blech 16 mündet. Mittels der sich verbreiternden beziehungsweise verjüngenden Bereiche 70 und 62 ist vorteilhaft eine mechanische Entlastung der Anschlussbereiche des Kontakts 65 gebildet, sodass im Falle einer federnden Bewegung sich die federnde Bewegung zwischen dem Kontakt 65 und dem Blech 16 über einen Bereich erstreckt, der die Mäanderschleifen 66, 67 und 68 umfasst. So kann vorteilhaft bei einem Hin- und Herschwingen des Kontaktes 65 die Schwingung nicht bevorzugt im Bereich einer Anbindung des Kontakts 65 an das Blech 16 erfolgen, was beispielsweise zu einer Materialermüdung und als weitere Folge zu einem Abbrechen des Kontaktes 65 von dem Blech führen könnte.

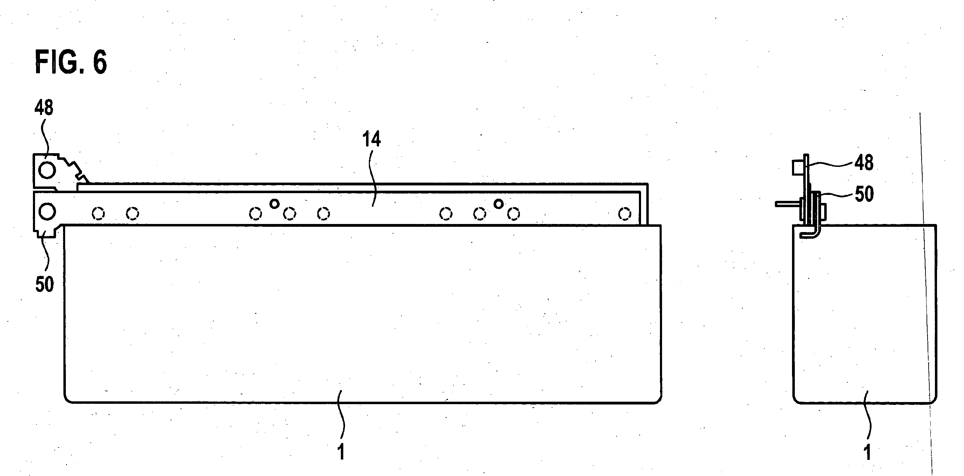

Figur 6 zeigt die in den Figuren 1 und 2 bereits gezeigte Speichereinheit 1 in einer Aufsicht. Dargestellt ist die negative Kontaktschiene 14, welche entlang einer Längserstreckung in den Anschluss 50 mündet. Dargestellt ist auch der Anschluss 48. Figur 6 zeigt auch eine Aufsicht auf die Stirnseite des Speicherelements 1. Dargestellt sind in der Aufsicht auf die Stirnseite auch die Anschlüsse 48 und 50.

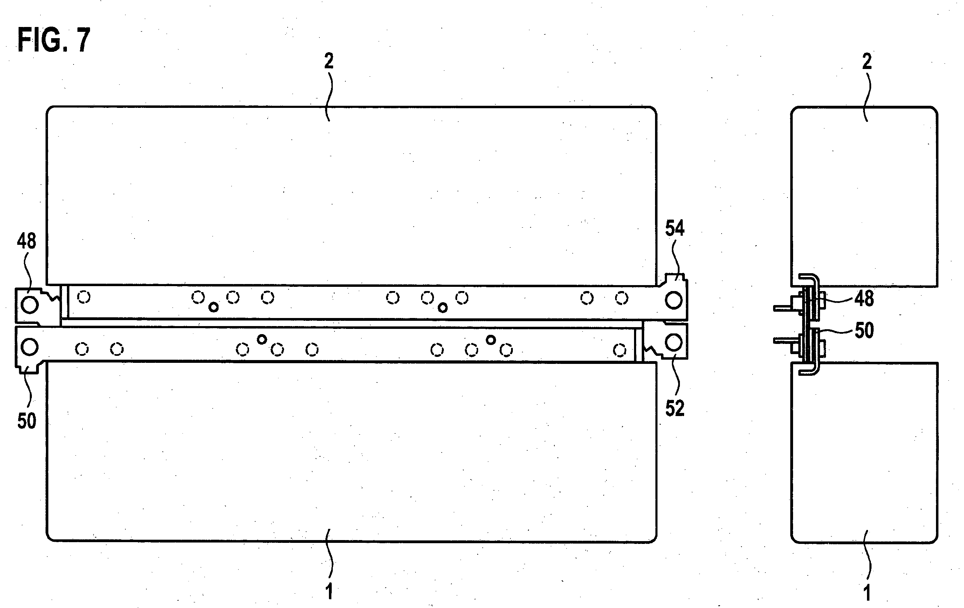

Figur 7 zeigt eine Aufsicht auf eine Speichereinheit 2, welche in Figur 7 zusammen mit der bereits in den Figuren 1, 2 und 6 beschriebenen Speichereinheit 1 dargestellt ist. Die Speichereinheit 2 ist wie die Speichereinheit 1 ausgebildet, wobei sich die Anschlüsse 52 und 54 zum Anschließen an die Antriebseinheit jeweils in eine zur Richtung der Anschlüsse 48 und 50 entgegengesetzte Richtung erstrecken und über Stirnseiten der Energiespeicher 1 und 2 hinausragen. Mittels der so gebildeten Anordnung, umfassend die Energiespeicher 1 und 2, kann besonders platzsparend eine elektrische Anschlusskonfiguration gebildet sein.

Bei der Anordnung weisen die Kontaktschienen der Energiespeicher 1 und 2 jeweils mit einer Stirnseite parallel zur Kontaktschienenlängsrichtung aufeinander zu. So ergibt sich eine Anordnung, bei der die Anschlüsse 48 und 50 jeweils im Bereich eines ersten Endes der zuvor beschriebenen Anordnung angeordnet sind, und die Anschlüsse 52 und 54 im Bereich eines zweiten Endes der Längserstreckung der Anordnung angeordnet sind.

## Patentansprüche

1. Speichereinheit (1, 2) zum Speichern elektrischer Energie, mit mehreren Energiespeichern (3, 5), wobei der Energiespeicher (3, 5) wenigstens einen positiven Anschluss (10) und wenigstens einen negativen Anschluss (11) aufweist, wobei der Energiespeicher (3, 5) ausgebildet ist, über den positiven Anschluss (10) und den negativen Anschluss (11) mit elektrischer Energie aufgeladen zu werden und die elektrische Energie über die Anschlüsse (10, 11) wieder abzugeben,
wobei die Speichereinheit (1, 2) eine mit dem positiven Anschluss (10) verbundene elektrisch leitfähige Kontaktschiene (12, 16) und eine mit dem negativen Anschluss (11) verbundene elektrisch leitfähige Kontaktschiene (14, 18) aufweist, wobei die Kontaktschienen (12, 14, 16, 18) jeweils wenigstens einen äußeren Anschluss (20, 22, 40, 42, 44, 46) zum elektrischen Verbinden der Speichereinheit (1, 2) aufweisen,
wobei die Kontaktschiene (12, 14) mittels eines Bleches (16, 18) mit dem wenigstens einen Anschluss (10, 11) verbünden ist, wobei das Blech (16, 18) im Bereich des Anschlusses (10, 11) wenigstens eine Aussparung (38, 39, 58, 61, 69) aufweist, wobei die Aussparung (38, 39, 58, 61, 69) einen Kontakt (34, 36, 57, 59, 60, 61, 62) wenigstens teilweise umgibt, wobei der Kontakt (34, 36, 57, 59, 60, 61, 62) mit dem Blech (16, 18) verbunden und an das Blech (16, 18) angeformt ist und im Bereich eines Endes des Kontakts (34, 36, 57, 59, 60, 61, 62) mit dem Anschluss (10, 11) des Energiespeichers (3, 5) verbunden ist,
**dadurch gekennzeichnet, dass** der Kontakt kurvenförmig ausgebildet ist und der kurvenförmige Kontakt (34, 36, 57, 59, 60, 61, 62) sich in der Aussparung (38, 39, 58, 61, 69) federnd bewegen kann.

2. Speichereinheit (1, 2) nach Anspruch 1,
**dadurch gekennzeichnet,**
**dass** der Energiespeicher (3, 5) den wenigstens einen positiven Anschluss (10) auf einer Seite des Energiespeichers (3, 5) aufweist, und den wenigstens einen negativen Anschluss (11) auf einer weiteren Seite aufweist, welche der Seite mit den positiven Anschlüssen gegenüberliegt, und die Speichereinheit mehrere Energiespeicher aufweist, welche zwischen den zwei Blechen aufgenommen sind, wobei von den zwei Blechen (16,18) ein erstes Blech (14) die negativen Anschlüsse (11) der Energiespeicher (3, 5) kontaktiert und ein zweites Blech die positiven Anschlüsse (10) der Energiespeicher (3, 5) kontaktiert.

3. Speichereinheit (1, 2) nach einem der vorhergehenden Ansprüche,
**dadurch gekennzeichnet,**
**dass** der kurvenförmige Kontakt (57, 59) eine L-Form als Kurvenform aufweist.

4. Speichereinheit (1, 2) nach Anspruch 2,
**dadurch gekennzeichnet,**
**dass** der kurvenförmige Kontakt (60, 62, 64, 65, 66, 67, 68, 70, 72) wenigstens eine Mäanderschleife (62, 64, 66, 67, 68) als Kurvenform aufweist.

5. Speichereinheit (1, 2) nach einem der vorhergehenden Ansprüche,
**dadurch gekennzeichnet,**
**dass** der Energiespeicher (3, 5) wenigstens einen Akkumulator und/oder wenigstens einen Kondensator aufweist.

6. Speichereinheit (1, 2) nach einem der vorhergehenden Ansprüche,
**dadurch gekennzeichnet, dass**
der positive (10) und/oder negative (11) elektrische Anschluss des Energiespeichers (3, 5) durch eine elektrisch leitfähige Schicht gebildet ist, wobei die Schicht von vielen kurvenförmigen Kontakten elektrisch kontaktiert ist.

7. Speichereinheit (1, 2) nach Anspruch 6,
**dadurch gekennzeichnet,**
**dass** mittels der Bleche 16 und 18 ist eine Art Hohlschiene oder Rinne gebildet, in der die Energiespeicher (3, 5) aufgenommen sind.

8. Speichereinheit (1, 2) nach Anspruch 7,
**dadurch gekennzeichnet,**
**dass** der kurvenförmige Kontakt (34, 36) mittels Stanzen oder Laserschneiden aus dem Blech (16, 18) erzeugt ist.

## Claims

1. Storage unit (1, 2) for storing electrical energy, comprising a plurality of energy stores (3, 5), wherein the energy store (3, 5) has at least one positive connection (10) and at least one negative connection (11), wherein the energy store (3, 5) is designed to be charged with electrical energy via the positive connection (10) and the negative connection (11) and to again output the electrical energy via the connections (10, 11),
wherein the storage unit (1, 2) has an electrically conductive contact rail (12, 16) which is connected to the positive connection (10) and has an electrically conductive contact rail (14, 18) which is connected to the negative connection (11), wherein the contact rails (12, 14, 16, 18) each have at least one external connection (20, 22, 40, 42, 44, 46) for electrically connecting the storage unit (1, 2),
wherein the contact rail (12, 14) is connected to the at least one connection (10, 11) by means of a metal sheet (16, 18), wherein the metal sheet (16, 18) has at least one cutout (38, 39, 58, 61, 69) in the region of the connection (10, 11), wherein the cutout (38, 39, 58, 61, 69) at least partially surrounds a contact (34, 36, 57, 59, 60, 61, 62), wherein the contact (34, 36, 57, 59, 60, 61, 62) is connected to the metal sheet (16, 18) and is integrally formed on the metal sheet (16, 18) and is connected to the connection (10, 11) of the energy store (3, 5) in the region of one end of the contact (34, 36, 57, 59, 60, 61, 62),
**characterized in that** the contact is of curved design, and the curved contact (34, 36, 57, 59, 60, 61, 62) can move in a resilient manner in the cutout (38, 39, 58, 61, 69).

2. Storage unit (1, 2) according to Claim 1,
**characterized**
**in that** the energy store (3, 5) has the at least one positive connection (10) on one side of the energy store (3, 5) and has the at least one negative connection (11) on a further side which is opposite the side with the positive connections, and the storage unit has a plurality of energy stores which are accommodated between the two metal sheets, wherein a first metal sheet (14) of the two metal sheets (16, 18) makes contact with the negative connections (11) of the energy stores (3, 5), and a second metal sheet of the said two metal sheets makes contact with the positive connections (10) of the energy stores (3, 5).

3. Storage unit (1, 2) according to either of the preceding claims,
**characterized**
**in that** the curved contact (57, 59) has an L shape as the curve shape.

4. Storage unit (1, 2) according to Claim 2, **characterized**
**in that** the curved contact (60, 62, 64, 65, 66, 67, 68, 70, 72) has at least one meandering loop (62, 64, 66, 67, 68) as the curve shape.

5. Storage unit (1, 2) according to one of the preceding claims,
**characterized**
**in that** the energy store (3, 5) has at least one rechargeable battery and/or at least one capacitor.

6. Storage unit (1, 2) according to one of the preceding claims,
**characterized**
**in that** the positive (10) and/or negative (11) electrical connection of the energy store (3, 5) is formed by an electrically conductive layer, wherein a large number of curved contacts make electrical contact with the layer.

7. Storage unit (1, 2) according to Claim 6, **characterized in that** a kind of hollow rail or channel is formed by means of the metal sheets (16 and 18), the energy stores (3, 5) being accommodated in the said hollow rail or channel.

8. Storage unit (1, 2) according to Claim 7, **characterized in that** the curved contact (34, 36) is produced by means of stamping or laser cutting from the metal sheet (16, 18).

## Revendications

1. Unité d'accumulation (1, 2) destinée à accumuler de l'énergie électrique, comprenant plusieurs accumulateurs d'énergie (3, 5), l'accumulateur d'énergie (3, 5) présentant au moins une borne positive (10) et au moins une borne négative (11), l'accumulateur d'énergie (3, 5) étant configuré pour être chargé en énergie électrique par le biais de la borne positive (10) et de la borne négative (11) et pour délivrer de nouveau l'énergie électrique par le biais des bornes (10, 11),
l'unité d'accumulation (1, 2) présentant un rail de contact (12, 16) électriquement conducteur relié à la borne positive (10) et un rail de contact (14, 18) électriquement conducteur relié à la borne négative (11), les rails de contact (12, 14, 16, 18) présentant respectivement au moins une borne extérieure (20, 22, 40, 42, 44, 46) destinée à la connexion électrique de l'unité d'accumulation (1, 2),
le rail de contact (12, 14) étant relié à l'au moins une borne (10, 11) au moyen d'une tôle (16, 18), la tôle (16, 18) présentant au moins un évidement (38, 39, 58, 61, 69) dans la zone de la borne (10, 11), l'évidement (38, 39, 58, 61, 69) entourant au moins partiellement un contact (34, 36, 57, 59, 60, 61, 62), le contact (34, 36, 57, 59, 60, 61, 62) étant relié à la tôle (16, 18) et étant façonné sur la tôle (16, 18) et étant relié à la borne (10, 11) de l'accumulateur d'énergie (3, 5) dans la zone d'une extrémité du contact (34, 36, 57, 59, 60, 61, 62),
**caractérisée en ce que** le contact est de configuration curviligne et le contact curviligne (34, 36, 57, 59, 60, 61, 62) peut se déplacer de manière élastique dans l'évidement (38, 39, 58, 61, 69).

2. Unité d'accumulation (1, 2) selon la revendication 1, **caractérisée en ce que** l'accumulateur d'énergie (3, 5) présente l'au moins une borne positive (10) sur un côté de l'accumulateur d'énergie (3, 5) et présente l'au moins une borne négative (11) sur un autre côté qui se trouve à l'opposé du côté où se trouvent les bornes positives, et l'unité d'accumulation présente plusieurs accumulateurs d'énergie qui sont accueillis entre les deux tôles, parmi les deux tôles (16, 18), une première tôle (14) étant en contact avec les bornes négatives (11) des accumulateurs d'énergie (3, 5) et une deuxième tôle étant en contact avec les bornes positives (10) des accumulateurs d'énergie (3, 5).

3. Unité d'accumulation (1, 2) selon l'une des revendications précédentes, **caractérisée en ce que** le contact curviligne (57, 59) présente la forme d'un L en tant que forme curviligne.

4. Unité d'accumulation (1, 2) selon la revendication 2, **caractérisée en ce que** le contact curviligne (60, 62, 64, 65, 66, 67, 68, 70, 72) présente au moins une boucle en méandre (62, 64, 66, 67, 68) en tant que forme curviligne.

5. Unité d'accumulation (1, 2) selon l'une des revendications précédentes, **caractérisée en ce que** l'accumulateur d'énergie (3, 5) présente au moins un accumulateur et/ou au moins un condensateur.

6. Unité d'accumulation (1, 2) selon l'une des revendications précédentes, **caractérisée en ce que** la borne électrique positive (10) et/ou la borne électrique négative (11) de l'accumulateur d'énergie (3, 5) sont formées par une couche électriquement conductrice, la couche étant en contact électrique avec de nombreux contacts curvilignes.

7. Unité d'accumulation (1, 2) selon la revendication 6, **caractérisée en ce qu'**une espèce de rail creux ou de rainure est formée au moyen des tôles (16 et 18), dans lequel/laquelle sont accueillis les accumulateurs d'énergie (3, 5).

8. Unité d'accumulation (1, 2) selon la revendication 7, **caractérisée en ce que** le contact curviligne (34, 36) est produit à partir de la tôle (16, 18) par estampage ou découpe au laser.
